(19) **Europäisches Patentamt / European Patent Office / Office européen des brevets**

(11) **EP 4 386 453 A1**

(12) # EUROPEAN PATENT APPLICATION

(43) Date of publication:
**19.06.2024 Bulletin 2024/25**

(21) Application number: **22306842.0**

(22) Date of filing: **12.12.2022**

(51) International Patent Classification (IPC):
**G01V 99/00** $^{(2024.01)}$

(52) Cooperative Patent Classification (CPC):
**G01V 20/00;** G01V 2210/64; G01V 2210/661

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **TOTALENERGIES ONETECH**
**92400 Courbevoie (FR)**

(72) Inventors:
- **MASSONNAT, Gérard**
  **64018 PAU CEDEX (FR)**
- **RUIU, Jérémy**
  **64018 PAU CEDEX (FR)**
- **LEMAY, Martin**
  **64018 PAU CEDEX (FR)**
- **GAL, Cédric**
  **64018 PAU CEDEX (FR)**

(74) Representative: **Plasseraud IP**
**66, rue de la Chaussée d'Antin**
**75440 Paris Cedex 09 (FR)**

(54) **METHOD FOR MODELLING A GEOLOGICAL PROCESS BY DEFORMING SEDIMENTARY SYSTEMS IN A PARAMETRIC SPACE FOR SIMULATION OF GEOLOGICAL RESERVOIRS**

(57)     The present disclosure provides a method for modelling a geological process by deforming sedimentary systems in a subsoil, the method comprising the following steps:

/a/ receiving (401) a sedimentary model comprising:
- a first sedimentary system of a first type and associated with a first geological time, comprising a volume and at least one surface (501) enclosing said volume; and
- a second sedimentary system of a second type and associated with a second geological time, comprising a volume and at least one surface (502) enclosing said volume;

/b/ applying (402) at least one Boolean operation representing a geological process to the first and second sedimentary systems as a function of the first geological time, the second geological time, the first type and the second type.

FIG. 7

**Description**

The present disclosure belongs to the field of simulation of geological reservoirs.

More precisely, the present disclosure refers to a method for modelling a geological process by deforming sedimentary systems in order to create a sedimentary model for simulation of geological reservoirs, such as aquifers or hydrocarbon reservoirs.

## BACKGROUND OF THE DISCLOSURE

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section. Furthermore, all embodiments are not necessarily intended to solve all or even any of the problems brought forward in this section.

The accurate determination of real subsoil structures and formations is essential for determining locations of geological reservoirs, such as aquifers or hydrocarbon reservoirs, in particular for determining positions where wells for hydrocarbon extraction or for fluid injection in carbon storage projects should be drilled. When the composition and structure of a subsoil are simulated, it is crucial, for the predictivity of the simulation results (and thus for the accuracy of the industrial forecasts), to precisely model the properties of the subsoil and its evolution over time.

Building sedimentary models may be complex and comprise the modeling of the composition of a subsoil in a pre-meshed space. Different sedimentary systems must then be assembled and amalgamed in the pre-meshed space.

Meshing of sedimentary systems prior to their assembly has several drawbacks as the size of the meshes and the orientation of the meshes induce a bias in the modeling. When modeling geological processes involving several sedimentary systems, it must be dealt with the connection of meshes of individual sedimentary systems during assembly of said systems. In addition, it may be difficult to accurately satisfy well constraints.

Accordingly, a need exists for properly modelling geological processes when building a sedimentary model from sedimentary systems.

## SUMMARY OF THE DISCLOSURE

The present disclosure provides a method for modelling a geological process by deforming sedimentary systems in a subsoil, the method comprising the following steps:

> /a/ receiving a sedimentary model comprising:

> - a first sedimentary system of a first type and associated with a first geological time, comprising a volume and at least one surface enclosing said volume; and

> - a second sedimentary system of a second type and associated with a second geological time, comprising a volume and at least one surface enclosing said volume;

> /b/ applying at least one Boolean operation representing a geological process to the first and second sedimentary systems as a function of the first geological time, the second geological time, the first type and the second type.

A sedimentary model allows modeling geological processes in a subsoil.

Sedimentary systems may be numerically "deposited" in a deposit space, thus creating a sedimentary model. A sedimentary system may correspond to a succession of geological bodies.

Geological bodies may comprise geological objects such as a levees, lobes, channels, fluvial bodies and bars. Geological bodies may further comprise geological connectors for interconnecting said geological objects.

A subsoil is a layer below the upper, outermost layer of soil. The subsoil may be a real subsoil.

A geological process may correspond to an event occurring on a geological timescale, such as erosion or draping.

A geological time may correspond to the time of deposition of a sedimentary system. It may be further called depositional time or sedimentary time.

A greater geological time may correspond to a later deposition of a corresponding sedimentary system, and thus to a deposition spatially besides or on top of sedimentary systems deposited earlier, i.e. at smaller geological times.

A sedimentary system may be defined by one or more surfaces encompassing a volume.

The surfaces may be parametric surfaces. A parametric surface is a surface (for instance, in Euclidean space) defined by a parametric equation.

In particular, the parametric surfaces may be NURBS surfaces. NURBS surfaces are piecewise polynomial functions defined by control points comprising ponderation coefficients, a polynomial degree and knot vectors. Often polynomials of degree three are used. NURBS allows easily modeling, saving, and simulation of parametric curves representing for example geological bodies.

Thus, each geological object and each sedimentary system may be represented by its boundaries. In boundary representation, shapes of objects are represented by a collection of connected surface elements, wherein each surface element is limited by a set of lines which themselves are limited by a set of corners. When building a sedimentary model from individual sedimentary systems each being a boundary representation, the resulting model may be one single boundary representation.

A Boolean operation may comprise all kinds of Boolean operations, such as basic Boolean operations as union, subtraction, intersection, and any combinations thereof, or more advanced operations such as extracting or carving.

The way a Boolean operation is applied to the first and second sedimentary systems depends, besides the type of Boolean operation, on several parameters, especially on the chronological order of deposition, i.e. the geological time, and on the types of geological bodies comprised by a given sedimentary system.

When a sedimentary system comprises several geological objects, the type of sedimentary system may depend locally on the type of geological object comprised by the sedimentary system.

Boolean operations may modify the volume of a sedimentary system and thus the surfaces that enclose said volume.

Deforming sedimentary system means that a new sedimentary system is created, comprising at least parts of the former interacting sedimentary systems.

The deformation occurs in such a way that no discontinuities at interfaces between sedimentary systems are created. The proposed method aims to respond to the drawbacks mentioned above by proposing a method for modelling a geological process by deforming sedimentary systems in a subsoil.

The method is innovative in that geological processes and deformations of sedimentary systems such as erosion may be modeled, when assembling sedimentary systems to a sedimentary model, by Boolean operations.

The method allows properly modeling geological relations in dependence on the types of sedimentary system and on the geological times, i.e. by considering the specific geological conditions and circumstances. Thus, the method allows obtaining geologically significant results.

A last step of the method may be to determine a real subsoil composition based on a result of step /b/, and output the real subsoil composition for future use in geophysical tools (allowing for example the determination of positions where wells for hydrocarbon extraction or fluid injection in carbon storage projects should be drilled).

In one embodiment, the at least one Boolean operation is chosen among a plurality of Boolean operations comprising an extracting operation.

A sedimentary system C resulting from an extracting operation applied to two sedimentary systems A, B corresponds to the sedimentary system A, which is preserved entirely, and the intersection part of both sedimentary systems A, B:

$$C = A + A \cap B$$

Here, "$A \cap B$" refers to an intersection of A and B, and "+" refers to a sum of components "A" and "$A \cap B$".

The application of the extracting operation may depend on the chronological order of deposition, i.e. the instants of deposition and on the types of geological object that each sedimentary system comprises.

The extracting operation allows including a part or the totality of one sedimentary system B inside another sedimentary system A. All parts of sedimentary system B that are outside of sedimentary system A are removed by the extracting operation.

In one embodiment, the at least one Boolean operation is chosen among a plurality of Boolean operations comprising a carving operation.

A sedimentary system C resulting from a carving operation applied to two sedimentary systems A, B corresponds to the sedimentary system A, which is preserved entirely, and sedimentary system B, deprived of the intersection part of both interacting sedimentary systems A and B:

$$C = A + (B - A \cap B)$$

Here, "$A \cap B$" refers to an intersection of A and B, "+" refers to a sum of components "A" and "($B$ - An $B$)", and "-" refers to a difference between components "$B$" and "$A \cap B$".

The application of the carving operation may depend on the chronological order of deposition, i.e. the instants of deposition and on the types of geological object that each sedimentary system comprises.

A carving operation allows simulation of geological processes such as erosion processes or draping processes.

In one embodiment, when the first sedimentary system is a channel and when the second sedimentary system is a lobe, a shape of the second sedimentary system is modified by a carving operation.

Thus, a lobe may be deposited without impacting a channel deposited earlier or later than the lobe. On the contrary, it is the shape of the lobe that is modified, no matter whether the lobe was deposited before or after the channel. This process is called draping.

In one embodiment, when the first sedimentary system is a first channel and when the second sedimentary system is a second channel, and when the first geological time is smaller than the second geological time, a shape of the first sedimentary system is modified by a carving operation.

Thus, a channel has the tendency to erode the subsoil, i.e. when a channel is deposited, another channel deposited earlier is eroded.

The shape of the second channel is not impacted.

In one embodiment, when the first sedimentary system is a first lobe and when the second sedimentary system is a second lobe located inside the first lobe, a shape of the second sedimentary system is modified by an extracting operation.

The extracting operation allows including the second lobe inside the first lobe, wherein parts of the second lobe that are outside the surface(s) of the first lobe are removed by the extracting operation.

In one embodiment, the first sedimentary system comprises a plurality of geological bodies and the second sedimentary system comprises one geological body, and the first type of the first sedimentary system depends locally on a type of a geological body comprised by the first sedimentary system.

Thus, the Boolean operation applied to a sedimentary model built from a geological body, and to a sedimentary system comprising a plurality of geological bodies depends locally on the type of geological body comprised by the sedimentary system.

Said method allows modelling complex situations, where a sedimentary model comprising a plurality of geological bodies and/or sedimentary systems is created.

In one embodiment, the first sedimentary system comprises a plurality of geological bodies and the second sedimentary system comprises a plurality of geological bodies, and the first type of the first sedimentary system depends locally on a type of a geological body comprised by the first sedimentary system and the second type of the second sedimentary system depends locally on a type of a geological body comprised by the second sedimentary system.

Thus, the Boolean operation applied to a sedimentary model built from a first and a second sedimentary systems each comprising a plurality of geological bodies depends locally on the type of geological body comprised each of the sedimentary system.

Said method allows modelling complex situations, where a sedimentary model comprising a plurality of sedimentary systems each comprising a plurality of geological bodies is created.

Another aspect of the invention refers to a device for modelling a geological process by deforming sedimentary systems in a subsoil, the device comprising:

- an interface for receiving a sedimentary model comprising :

  *a first sedimentary system of a first type and associated with a first geological time, comprising a volume and at least one surface enclosing said volume; and
  *a second sedimentary system of a second type and associated with a second geological time, comprising a volume and at least one surface enclosing said volume;

- a circuit for applying at least one Boolean operation representing a geological process to the first and second sedimentary systems as a function of the first geological time, the second geological time, the first type and the second type.

The device may be configured to carry out the method disclosed above.

The proposed device aims to respond to the drawbacks mentioned above by proposing a device for modelling a geological process by deforming sedimentary systems in a subsoil.

The device is innovative in that geological processes and deformations of sedimentary systems such as erosion may be modeled, when assembling sedimentary systems to a sedimentary model, by Boolean operations.

The device allows properly modeling geological relations in dependence on the types of sedimentary system and on the geological times, i.e. by taking into account the specific geological conditions and circumstances.

Thus, the device allows obtaining geologically significant results, allowing for example the determination of positions where wells for hydrocarbon extraction or fluid injection in carbon storage projects should be drilled.

Another aspect of the invention refers to a non-transitory computer readable storage medium, having stored thereon a computer program comprising program instructions, the computer program being loadable into a data-processing unit and adapted to cause the data-processing unit to carry out a method for modelling a geological process by deforming sedimentary systems having the features mentioned above.

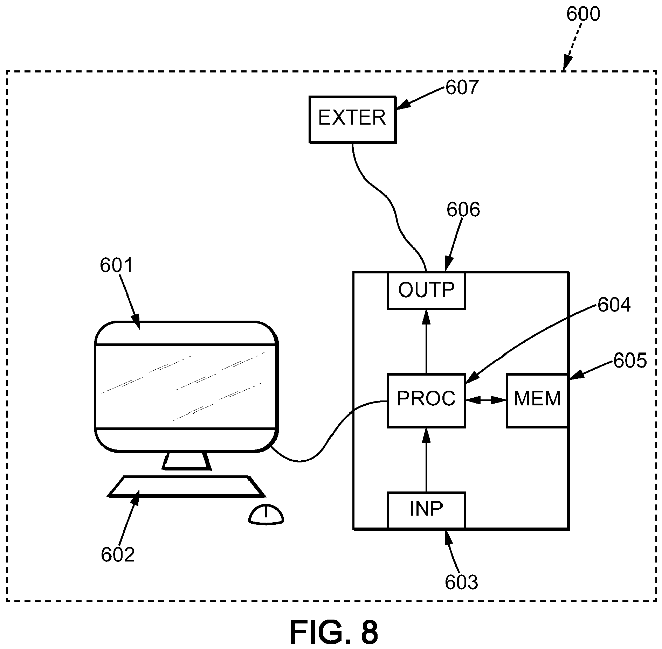

Fig. 8, described in detail below, can form the flowchart for the general algorithm of such a computer program.

## BRIEF DESCRIPTION OF THE DRAWINGS

The accompanying drawings, which are incorporated herein and form part of the specification, illustrate the present disclosure and, together with the description, further serve to explain the disclosure and to enable a person skilled in the pertinent art to make and use the disclosure. In the drawings, like reference characters indicate identical or functionally similar elements.

- Fig. 1 shows a schematic side view of a channel and a point bar.
- Fig. 2 shows schematic cross-sectional views of a channel and a point bar.
- Fig. 3 shows a flow-chart of a method for interconnecting the channel and the point bar of figs. 1 and 2.
- Fig. 4 shows a schematic side view of three channels connected by a diffluence connector.
- Figs. 5a and 5b show the effect of a carving operator and of an extracting operator.
- Fig. 6 shows a schematic representation of two channels.
- Fig. 7 shows a flow-chart of a method for modelling a process by deforming the two channels of fig. 6.
- Fig. 8 shows a non-transitory computer readable storage medium configured to implement the methods as described in figs. 3 and 7.

## DESCRIPTION OF PREFERRED EMBODIMENTS

In the following, a method for building a three-dimensional sedimentary model is provided. The method implements the connection of geological objects to build sedimentary systems, and the deformation of these sedimentary systems by reproducing geological processes.

A real subsoil can be represented by such a sedimentary model that reproduces the main features of the subsoil.

In this sedimentary model, basic geological objects such as levees, lobes, channels, fluvial bodies and bars may be represented by NURBS (or non-uniform Rational B-Splines) surfaces, wherein different NURBS surfaces are connected to each other on their respective boundaries in order to provide the shape of a given geological object with a closed volume.

NURBS is a mathematical model used in computer graphics for generating and representing curves and surfaces. It offers great flexibility and precision for handling both analytic (surfaces defined by common mathematical formulae) and modeled shapes.

A NURBS-surface is characterized by control points, two knot vectors (one for each direction u,v of the NURBS surface) and polynomial functions, typically having a polynomial degree of three. Two NURBS surfaces are equal when the control points, the knot vectors and the piecewise polynomial functions are equal.

Different geological objects may be connected to build more complex sedimentary systems. When a given sedimentary system is constructed, the geological objects of which the sedimentary system will be composed may be picked from a library of geological bodies (i.e. geological objects and connectors configured to interconnect two or more geological objects). Such a library may be created by genetic processes, i.e. said geological bodies may be determined from simulations and may be tailored for the construction of a specific sedimentary system.

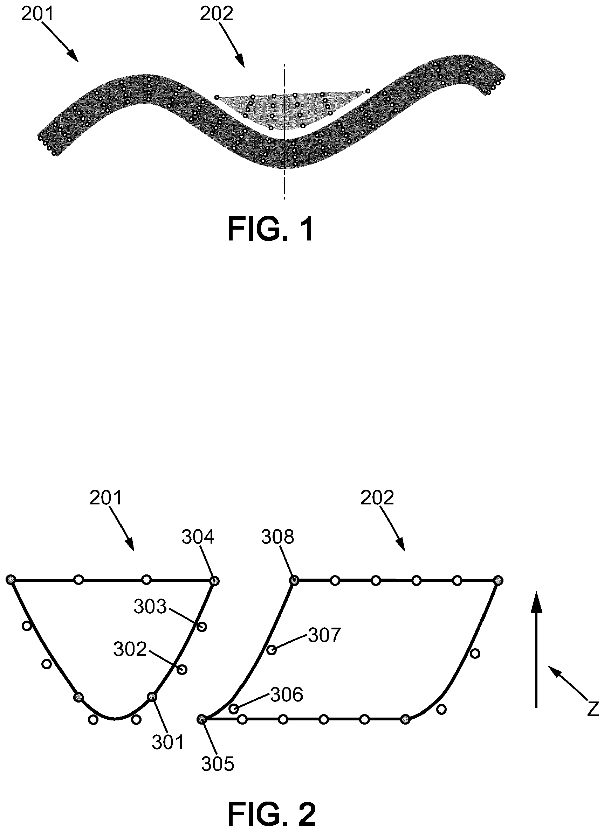

As an example of two geological objects intended to be connected, figure 1 show a top-view of NURBS surfaces 201 representing a channel and NURBS surfaces 202 representing a point bar. Figure 2 shows a cross sectional view, along the dashed line shown in figure 1, of the NURBS surfaces 201 representing the channel and the NURBS surfaces 202 representing the point bar.

The circles on the respective NURBS surfaces represent the control points.

The thickness of the first geological object, i.e. the channel, to be connected may be chosen such that it is equal to the thickness of the second geological object, i.e. the point bar, wherein the thickness is measured here in the vertical direction z.

A connection surface is identified in both geological objects in the region where the two geological objects are intended to be connected to each other. Both connection surfaces will be required to overlap and to be identical in order for the geological objects to be properly connected.

The two geological objects are then brought close to each other with the two connection surfaces facing each other. The connection surfaces of the two geological objects may not have the exact same shape, and each control point on the connection surface of the point bar may not have a counterpart at the same height z on the connection surface of the channel.

Thus, immediate connection of the channel to the point bar is not possible, since a connection of both geological objects in their current state would lead to deformation of the two objects and to "un-geological" forms. The connection surfaces would not overlap and discontinuities may occur between the NURBS surfaces 201, 202 of the geological objects.

Therefore, the connection surface of the channel has to be modified.

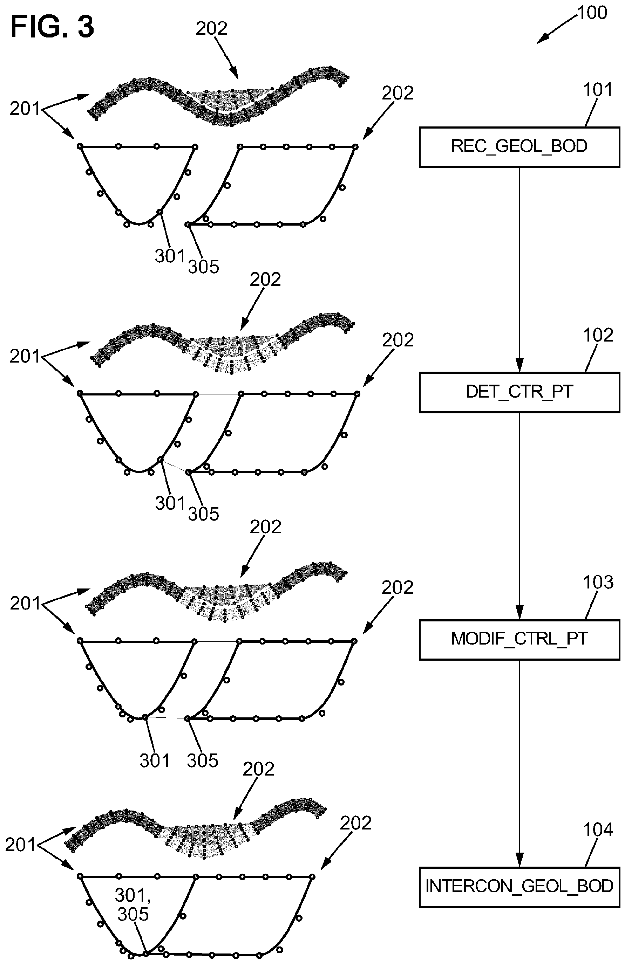

Figure 3 is a flow chart of a method to properly connect geological objects and/or connectors.

The geological objects to be connected are selected 101, here the channel and the point bar of figures 1 and 2.

A low control point 301 is identified 102 on the connection surface of the channel (represented by NURBS surfaces 201) and a low control point 302 on the connection surface of the point bar (represented by NURBS surfaces 202). The low control point 301, 302 is a control point located in the lower region of the surface of a geological object, i.e. at a low vertical position z with respect to the geographical height as shown in figure 2. For example, the corresponding low control point 301, 302 may be located lower than the majority of control points of the corresponding surface or lower than the center of mass / geometric center of the corresponding surface.

The low control point 301 of the channel is modified 103 and brought to the same height as the low control point 305 of the point bar. Both low control points 301, 305 now have the same z-coordinate. It is then ensured that other pairs control points 302, 303, 304, 306, 307, 308 on the connection surfaces are brought to the same respective height.

For the sake of completeness, it is pointed out that it is not necessary to create new control points as counterparts for each control point present on any of the two connection surfaces by adding additional control points to the respectively other connection surface, which would make the representation more complicated.

The modification 103 of the low control point is made in such a way that the modification of the global shape of the channel and in particular of the connection surface is minimized. This may be ensured for example by application of a gradient descent method, in which squared distances between the connection surface before and after modification are minimized.

Further constraints may be imposed on the connection surface or on other surfaces of the channel, in order to minimize any kinds of unwanted deformations of the connection surface of the channel.

Now, each control point 301, 302, 303, 304 on the connection surface of the channel has a corresponding counterpart 305, 306, 307, 308 at the same height on the connection surface of the point bar.

The channel and the point bar are then brought together at their connection interfaces, and the control points 301, 302, 303, 304 on the connection surface of the channel are matched 104 with the control points 305, 306, 307, 308 on the connection surface of the point bar, i.e. it is ensured that the respective pairs of corresponding control points 301 - 308 have the same three-dimensional coordinates. Furthermore, the two knot vectors of the connection surface of the channel are matched 104 with the two knot vectors of the connection surface of the point bar, i.e. it is ensured that corresponding knot vectors have identical elements.

Matching 104 of the knot vectors may comprise inserting one or several knots (i.e. elements) into corresponding knot vectors of the surfaces being connected, in such a way that both knot vectors comprise the same knots. This means that knots that are present in the first knot vector but not in the second knot vector may be inserted in the second knot vector, and vice versa.

For example, matching of a knot vector of a first surface equal to [0 0 1 5] and a knot vector of a second surface equal to [0 0 1 75] may yield a knot vector equal to [0 0 1 5 75].

The two connection surfaces are now identical, and a watertight connection is provided, i.e. no holes between different surfaces or unwanted major deformations of the surfaces of the resulting sedimentary system appear. The volumes of the geological objects are now continuously connected.

The method 100 can be reiterated for each further geological object that is connected, wherein the connection surface of any geological object that is connected later is brought into conformity with the connection surface of geological objects that were connected earlier.

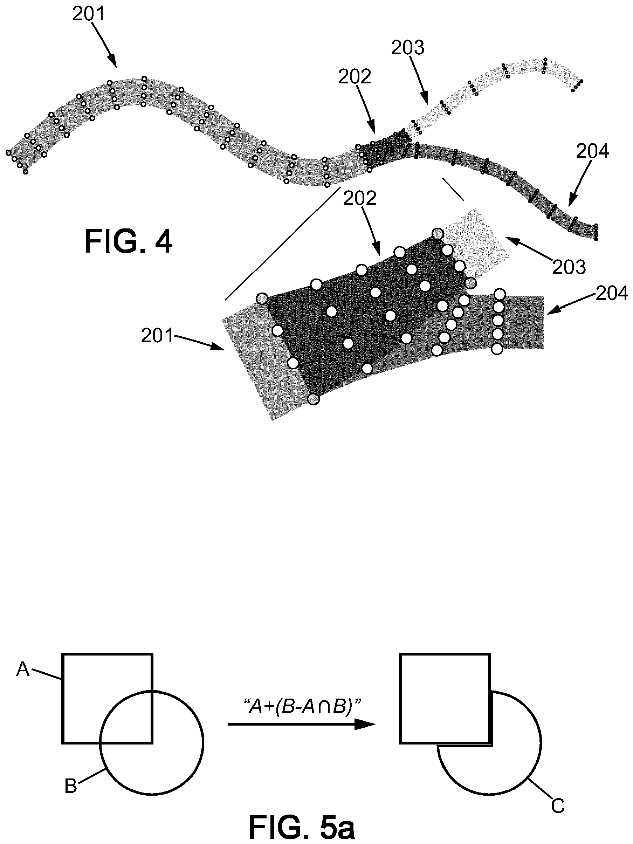

An example of a sedimentary system that may be constructed from a succession of NURBS surfaces representing respective geological bodies is shown in figure 4, wherein the geological bodies are represented by their respective NURBS surfaces 201, 202, 203, 204. Here, three channels (represented by NURBS surfaces 201, 203, 204) have been connected to each other by a diffluence connector (represented by NURBS surfaces 202). For the connection of the diffluence connector with each of the channels, the above-described method may be applied.

In order to build a sedimentary model representative of a subsoil, several such sedimentary systems may be deformed by reproducing geological processes. Such geological processes may be for example erosion or draping and may be modeled by Boolean operators.

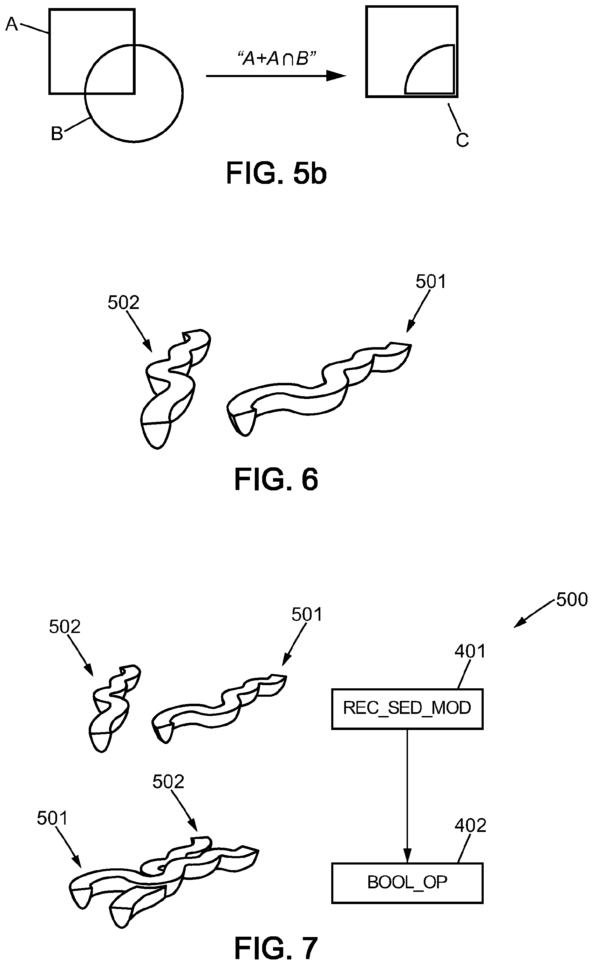

Figures 5a and 5b shows the impact of two Boolean operators that are considered as an example: carving operators and extracting operators.

Figure 5a shows a carving operation applied to two sedimentary systems A, B. The resulting sedimentary system C corresponds to the sedimentary system A, which is preserved entirely, and sedimentary system B, deprived of the intersection part of both interacting sedimentary systems A and B:

$$C = A + (B - A \cap B)$$

Here, "$A \cap B$" refers to an intersection of A and B, "+" refers to a sum of components "A" and "($B - A \cap B$)", and "-" refers to a difference between components "$B$" and "$A \cap B$".

A carving operation allows modeling geological processes such as erosion or draping.

Figure 5b shows an extracting operation applied to two sedimentary systems A, B. The resulting sedimentary system C corresponds to the sedimentary system A, which is preserved entirely, and the intersection part of both sedimentary systems A, B:

$$C = A + A \cap B$$

Here, "$A \cap B$" refers to an intersection of A and B, and "+" refers to a sum of components "$A$" and "$A \cap B$".

An extracting operation allows including a part or the totality of one sedimentary system B inside another sedimentary system A. All parts of sedimentary system B that are outside of sedimentary system A are removed by the extracting operation.

Boolean operators act on the volume of the sedimentary systems. The NURBS surfaces delimiting the volume are then modified in order to delimit the new volume after application of the Boolean operator. NURBS surfaces are very effective as it is very simple to subtract volumes of geological objects.

The way in which the Boolean operators are applied depends on the type of sedimentary system, and in particular on the type of geological objects that are locally comprised by the sedimentary system. The way in which the Boolean operators are applied further depends on the geological time associated with each sedimentary system.

A geological time may correspond to the time of deposition of a sedimentary system. A greater geological time may correspond to a later deposition of a corresponding sedimentary system, and thus to a deposition spatially besides or on top of sedimentary systems deposited earlier, i.e. at smaller geological times.

Now, two sedimentary systems each comprising a plurality of geological objects are considered. Figure 6 shows by way of example a first channel represented by NURBS surfaces 501 and a second channel represented by NURBS surfaces 502. Each channel may be part of a respective sedimentary system.

A geological time may be associated with each of the sedimentary system, indicating at which time the corresponding sedimentary systems are deposited. The first channel is associated with a first geological time and the second channel is associated with a second geological time.

The type of geological process that is modeled and the type of Boolean operator that is applied may depend on the type of sedimentary systems that are interacting, in particular on the type of geological objects comprised by the sedimentary systems that are interacting, and further on the geological times of the involved geological objects.

Figure 7 is a flow chart of a method to model a geological process by deforming sedimentary systems in a subsoil.

The two above-mentioned sedimentary systems to be deformed are selected 401. The first channel is represented by NURBS surfaces 501 and the second channel is represented by NURBS surfaces 502.

Here, it is considered that the second channel is deposited before the first channel, i.e. the geological time associated with the second channel is smaller than the geological time associated with the first channel. In this case, a carving operator is applied, with the first channel being the sedimentary system A and with the second channel being the sedimentary system B.

Thus, the first channel will be preserved entirely, and the second channel will be deprived of the intersection part of both channels. The second channel will erode because the first channel cuts into it.

In another example not shown in the figures, the deformation of a channel and a lobe will be considered. If a channel and a lobe are deposited, the lobe will be eroded by the channel and the channel cuts into the lobe, which may be modeled by the carving operation. The lobe adapts to the shape of the channel, no matter whether the lobe was deposited before or after the channel. Then, in the above-mentioned equation of the carving operation, the lobe will be sedimentary system "B" and the channel will be sedimentary system "A".

In again another example not shown in the figures, the interaction of two lobes of different sizes is considered. A small second lobe may be located inside a first lobe. Parts of the second lobe may be located outside of the surfaces of the first lobe. Then, the parts of the second lobe located outside of the first lobe will be removed, which may be modeled by an extracting operation, wherein the second lobe will be sedimentary system "B" and the first lobe sedimentary system "A". This application of the extracting operation may occur no matter whether the first lobe or the second lobe was deposited first.

The volumes of the deformed sedimentary systems remain continuous and the interaction region of the sedimentary systems remains watertight, in the sense that no holes appear in the surfaces or between the volumes in the connection region.

The above-mentioned Boolean operations, geological processes and geological objects are considered by way of example. A skilled person would know how to apply the above-described methods to other cases.

A complete sedimentary may be built according to the method as described above. The sedimentary model may then be meshed with a three-dimensional mesh that may be adapted to the details of the sedimentary model.

Simulations may then be carried out with the meshed sedimentary model.

Figure 8 is a possible embodiment for a device that is configured to implement the method described in relation to figures 3 and 7.

In this embodiment, the device 600 comprise a computer, this computer comprising a memory 605 to store program instructions loadable into a circuit and adapted to cause circuit 604 to carry out the steps of the present invention when the program instructions are run by the circuit 604.

The memory 605 may also store data and useful information for carrying the steps of the present invention as described above.

The circuit 604 may be for instance:

- a processor or a processing unit adapted to interpret instructions in a computer language, the processor or the processing unit may comprise, may be associated with or be attached to a memory comprising the instructions, or

- the association of a processor / processing unit and a memory, the processor or the processing unit adapted to interpret instructions in a computer language, the memory comprising said instructions, or

- an electronic card wherein the steps of the invention are described within silicon, or

- a programmable electronic chip such as a FPGA chip (for « Field-Programmable Gate Array »).

This computer comprises an input interface 603 for the reception of data/model/input used for the above method according to the invention and an output interface 606 for providing a complete model. The output interface 606 may be coupled to any external device 607.

To ease the interaction with the computer, a screen 601 and a keyboard 602 may be provided and connected to the computer circuit 604.

It will be appreciated that the embodiments described above are illustrative of the invention disclosed herein and that various modifications can be made without departing from the scope as defined in the appended claims.

## Claims

1. Method for modelling a geological process by deforming sedimentary systems in a subsoil, the method comprising the following steps:

   /a/ receiving (401) a sedimentary model comprising:

   - a first sedimentary system of a first type and associated with a first geological time, comprising a volume and at least one surface (501) enclosing said volume; and
   - a second sedimentary system of a second type and associated with a second geological time, comprising a volume and at least one surface (502) enclosing said volume;

   /b/ applying (402) at least one Boolean operation representing a geological process to the first and second sedimentary systems as a function of the first geological time, the second geological time, the first type and the second type.

2. Method according to claim 1, wherein the at least one Boolean operation is chosen among a plurality of Boolean operations comprising an extracting operation.

3. Method according any of the preceding claims, wherein the at least one Boolean operation is chosen among a plurality of Boolean operations comprising a carving operation.

4. Method according to any of the preceding claims, wherein, when the first sedimentary system is a channel and when the second sedimentary system is a lobe, a shape of the second sedimentary system is modified by a carving operation.

5. Method according to any of claims 1 - 3, wherein, when the first sedimentary system is a first channel and when the second sedimentary system is a second channel, and when the first geological time is smaller than the second geological time, a shape of the first sedimentary system is modified by a carving operation.

6. Method according to any of claims 1 - 3, wherein, when the first sedimentary system is a first lobe and when the second sedimentary system is a second lobe located inside the first lobe, a shape of the second sedimentary system is modified by an extracting operation.

7. Method according to any of the preceding claims, wherein the first sedimentary system comprises a plurality of geological bodies and the second sedimentary system comprises one geological body, and wherein the first type of the first sedimentary system depends locally on a type of a geological body comprised by the first sedimentary system.

8. Method for any of the preceding claims, wherein the first sedimentary system comprises a plurality of geological bodies and the second sedimentary system comprises a plurality of geological bodies, and wherein the first type of the first sedimentary system depends locally on a type of a geological body comprised by the first sedimentary system and the second type of the second sedimentary system depends locally on a type of a geological body comprised by the second sedimentary system.

9. Device for modelling a geological process by deforming sedimentary systems in a subsoil, the device comprising:

   - an interface for receiving (401) a sedimentary model comprising :

   *a first sedimentary system of a first type and associated with a first geological time, comprising a volume and at least one surface (501) enclosing said volume; and
   *a second sedimentary system of a second type and associated with a second geological time, comprising a volume and at least one surface (502) enclosing said volume;

   - a circuit for applying (402) at least one Boolean operation representing a geological process to the first and second sedimentary systems as a function of the first geological time, the second geological time, the first type and the second type.

10. A non-transitory computer readable storage medium (600), having stored thereon a computer program comprising program instructions, the computer program being loadable into a data-processing unit and adapted to cause the data-processing unit to carry out a method for modelling a geological process by deforming sedimentary systems according to any of claims 1 - 8.

201
202

FIG. 1

201
304 308
303
302
307
301 306
305
Z

FIG. 2

**FIG. 3**

201

203

202

FIG. 4

202

204

203

201

204

A

"A+(B-A∩B)"

B

C

FIG. 5a

**FIG. 5b**

"A+A∩B"

A

B

C

502

501

**FIG. 6**

502

501

500

401

REC_SED_MOD

502

501

402

BOOL_OP

**FIG. 7**

FIG. 8

Europäisches
Patentamt
European
Patent Office
Office européen
des brevets

**EUROPEAN SEARCH REPORT**

Application Number

EP 22 30 6842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 819 682 A1 (TOTAL SE [FR]) 12 May 2021 (2021-05-12) * abstract; claims 1-3; figures 3a-c * * paragraphs [0006], [0086], [0092], [0120], [0129], [0130], [0133], [0139] * | 1-10 | INV. G01V99/00 |
| A | M Parquer ET AL: "Conditioning Channel Backward Migration Modeling to Seismic Data", 78th EAGE Conference & Exhibition 2016, 30 May 2016 (2016-05-30), XP055693327, DOI: 10.3997/2214-4609.201601343 Retrieved from the Internet: URL:https://www.earthdoc.org/docserver/fulltext/2214-4609/2016/Th_LHR4_01.pdf?expires=1588958812&id=id&accname=fromqa185&checksum=AD178B1E3F4E5C3B17AE4860076D27B3 [retrieved on 2020-05-08] * abstract * * Section Introduction; page 2 * * Section Mathematical Support; page 3 * * Conclusions; page 4 * | 1-10 | |

-/--

TECHNICAL FIELDS
SEARCHED        (IPC)

G01V

The present search report has been drawn up for all claims

| Place of search | Date of completion of the search | Examiner |
|---|---|---|
| The Hague | 28 April 2023 | Fernandes, Paulo |

EPO FORM 1503 03.82 (P04C01)

Europäisches
Patentamt

European
Patent Office

Office européen
des brevets

# EUROPEAN SEARCH REPORT

Application Number

**EP 22 30 6842**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | C Jacquemyn: "We Efe 13 Geologic Modelling Using Parametric NURBS Surfaces Introduction", 15 th European Conference on the MathematicsImperial College London) European Conference on the Mathematics of Oil Recovery 29 August ? 1, 29 August 2016 (2016-08-29), XP055691150, Retrieved from the Internet: URL:https://www.earthdoc.org/docserver/fulltext/2214-4609/494/We_Efe_13.pdf?expires=1588583992&id=id&accname=fromqa185&checksum=11E057318FE3E96CD5D0683500FFCD6E [retrieved on 2020-05-04] * abstract * | 1-10 | |
| A | SALINAS P ET AL: "Dynamic mesh optimisation for geothermal reservoir modelling", GEOTHERMICS, PERGAMON PRESS, GB, vol. 94, 20 March 2021 (2021-03-20), XP086614310, ISSN: 0375-6505, DOI: 10.1016/J.GEOTHERMICS.2021.102089 [retrieved on 2021-03-20] * abstract * * Section Surface-based reservoir modelling; page 2 * | 1-10 | TECHNICAL FIELDS SEARCHED (IPC) |

The present search report has been drawn up for all claims

| Place of search | Date of completion of the search | Examiner |
|---|---|---|
| The Hague | 28 April 2023 | Fernandes, Paulo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 30 6842

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2023

| Patent document cited in search report | | Publication date | Patent family member(s) | | Publication date |
|---|---|---|---|---|---|
| EP 3819682 | A1 | 12-05-2021 | EP | 3819682 A1 | 12-05-2021 |
| | | | US | 2021141112 A1 | 13-05-2021 |

For more details about this annex : see Official Journal of the European Patent Office, No. 12/82

EPO FORM P0459